# NEW EUROPEAN PATENT SPECIFICATION

(11) **EP 1 984 135 B2**
(45) Date of publication and mention of the opposition decision: **02.08.2017**
(45) Mention of the grant of the patent: 31.03.2010
(21) Application number: 07705087.0
(22) Date of filing: 01.02.2007
(51) Int. Cl.: B23B 27/22, B23B 27/16, B23D 77/02

(54) **A CUTTING INSERT**
SCHNEIDEINSATZ
INSERT DE COUPE

(30) Priority: 02.02.2006 GB 0602067
(43) Date of publication of application: 29.10.2008
(73) Proprietor: KENNAMETAL INC., Latrobe, PA 15650 (US)
(72) Inventor: MINSHALL, Gerald, Warwickshire B49 6EA (GB)
(74) Representative: Brown, Fraser Gregory James
(86) International application number: PCT/GB2007/000323
(87) International publication number: WO 2007/088353

(56) References cited:
- EP-A- 1 310 312
- EP-A- 1 435 270
- EP-A1- 0 541 071
- BE-A3- 1 014 066
- DE-A1- 4 423 861
- DE-A1- 19 937 739
- GB-A- 2 381 767
- GB-A- 2 408 735
- US-A- 2 435 287
- US-A- 5 115 697
- US-A- 5 823 276
- US-A- 6 146 060
- US-B1- 6 409 435

## Description

### Field

This invention relates to cutting inserts according to the preamble of claim 1 for machine tools such as reamers and borers and to a method of securing such a cutting insert to a machine tool.

### Background of the Invention

Diamond is the hardest, and therefore, the most abrasion resistant of all materials and some cutting tips or blade edges for machine tools are formed from diamond powder which may be formed into polycrystalline diamond(PCD) which is extremely hard and has good abrasion resistance as compared with carbide cutting tools.

PCD is a composite of individual diamond crystals sintered together in an inter-connected network. The PCD crystals may be sintered directly onto a cutting tool such as a rotary cutter as is shown in EP0 0528243A.

PCD is also available in round blanks comprising a first phase of PCD formed a second phase of sintered tungsten carbide. The blanks are made by applying ultra high pressure and a high temperature to a layer of diamond powder on a bed of a metal carbide, nitride or carbonitride powder substrate. The metallic second phase infiltrates from the cemented carbide substrate into the interstitial regions between diamond crystals during the process and bonds the diamonds together. The resultant blank combines an extremely hard PCD surface bonded to a carbide substrate. All this is described in GB 2408735-A.

PCD blanks are very expensive and the PCD blank is then typically cut into a number of small portions which may be mounted directly onto cutting tools by brazing as is shown in DE19937739-A. However, this has a disadvantage in that the whole tool must be discarded or factory serviced once the PCD tool tip is worn or damaged.

A further disadvantage of the PCD blank material is that the material is relatively brittle and may break if subjected to tool clamping loads. In another development a PCD tool tip is welded or brazed on a supporting body which in turn is secured to a tool head by mechanical means. This arrangement ensures that any clamping loads are taken by the body of the insert and also permits the interchange of the insert. Such an insert is available from the present applicants.

Another known insert is shown in DE 4423 861 which discloses a cutting insert having PCD tips brazed onto a body and which is re-orientatable in the tool allowing each tip to be used in turn.

The welding or brazing of PCD tips onto a supporting body is an expensive operation and the tips must be accurately ground after the welding process.

GB 2381767-A discloses a cutting blade insert for a reaming tool which is formed with a plurality of orthogonal grooves on a rear mounting surface. These mate with corresponding ridges on a tool recess mounting surface. A bore is provided through the insert front face which permits the use of a seven-threaded spigot to hold the tool in position. Thus the blade does not have a flat front face.

EP 1435270-A discloses a disposable cutting blade insert according to the preamble of claim 1 which has a generally annular configuration, by virtue of a mounting bore. In a description of prior art inserts there is disclosed a blade insert having a PCD sintered blade layer formed on a carbide substrate, which would be mounted on a tool by the use of a wedge or shim and clamping piece. There is no disclosure of the use of mounting grooves on the substrate rear face.

### Object of the present Invention

The present invention seeks to provide an improved and more economically manufactured PCD cutting blade insert for a machine tool.

### Statements of Invention

According to the invention there is provided a cutting blade insert having the features of claim 1.

The blade has four cutting edges, and is substantially square, and the rear of the blade is provided with two sets of intersecting serrations.

The serrations may have many different forms including symmetrical wave form such as sinusoidal waves, zig-zag forms, corrugations, and non symmetrical serrations.

According to another aspect of the invention there is provided a cutting tool comprising a body having a recess therein with a blade according to the first aspect of the invention mounted therein, each groove on the rear of the blade mutually inter-engaging with a co-operating ridge or ridges on the tool to secure the blade against machining loads.

Preferably the ridges extend across the full width of the blade and the cutting blade is adjustably positioned along the ridge(s) by means of a single screw threaded adjuster. The inter-engaging groove and ridge prevent the blade from tipping during adjustment.

The ridges on the tool may be formed as a series of serrations, and the serrations on the tool can be formed on a face of the recess, or alternatively on a removable carrier which is mounted in the recess.

The blade is secured to said face by the head of a clamping screw or a clamp down plate. However, the clamping load can be relatively low since the machining loads are taken by the inter-engaging groove(s) and ridge(s).

With a square blade, having sets of intersecting serrations on the rear face, each of the four cutting edges can be utilised by unclamping the blade to release the interengaging serrations and then rotating the blade as desired and re-engaging the serrations.

There is further provided a method of securing a PCD material cutting blade insert according to the invention in a cutting tool, wherein the cutting blade insert is clamped against a mutually inter-engagable ridge provided on the tool.

Preferably, a groove(s) is provided substantially normal to each cutting edge, with the cutting edge of the blade being adjusted to a new position by movement of the blade along a ridge or ridges provided on the tool.

The duty cutting edge can be changed or the blade changed, simply by removing the blade from the carrier and relocating said blade, or another identical blade on the serrations or ridges, to provide a new cutting edge, with the mutually inter-engaging grooves and ridges ensuring re-alignment of said cutting edge.

### Description of drawings

- Fig. 1: is a plan view of a prior art cutting blade insert,
- Fig. 2: is an isometric view of a cutting blade insert according to the present invention,
- Fig. 3: is an end view of the cutting blade insert shown in Fig. 2,
- Fig. 4: is a plan view of the cutting blade insert of Fig.2 showing the PCD surface,
- Fig. 5: is a schematic radial section through a cutting tool showing the cutting blade insert in situ, and
- Fig. 6: is a side view of the tool shown in Fig.5.

### Detailed Description of the Invention

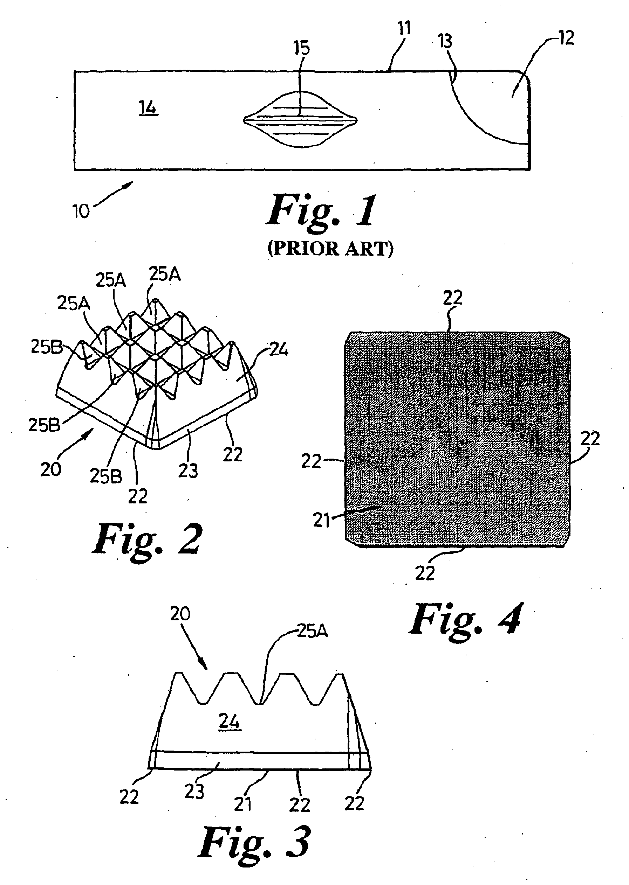

A prior art cutting blade or insert 10 is shown in Fig.1 and has tungsten carbide body 11 which is substantially rectangular in plan. The front face 14 of the insert has a depression 15, or dimple, formed therein which is located symmetrically about the approximate mid-length centre line and the mid width centre line of the face 14. The depression is utilised in the clamping of the insert 10 into a tool as is described in detail in GB 2338 196.

A PCD cutting tip 12 is brazed into a pocket 13 formed in the tungsten carbide body 11.

With reference now to Figs. 2 to 4 in particular, there is shown a cutting blade insert 20 according to the present invention. The insert 20 is cut from a PCD blank having a PCD phase 23 formed on a carbide substrate 24, using an electro discharge wire cutting process. The insert 20 is a substantially square planar shape having a flat front face 21 on the PCD phase with at least two, and preferably four cutting edges 22 formed thereon. The PCD phase generally has a thickness of 0.45-0.7mm depending upon the size of the diamond grains. The carbide substrate 24 forms the rear of the insert 20 and is typically between 0.55-2.6mm in thickness. For the present embodiment the PCD phase 23 is about 0.7mm in thickness and the carbide substrate is between 1.3 & 2.6mm in thickness.

The rear of the insert 20 is provided within the rear surface, a plurality of serrations 35 thereon. The serrations 35 comprise serrations which extend substantially normal to the cutting edges 24 for the full length of the blade 20. In the present example with four cutting edges 34 one set of serrations 25A extends transversely of the other set of serrations 25B so that the serrations 25A & 25B intersect each other forming separate pyramidal projections. The serrations typically have a depth of 0.85mm and are ground into the substrate by means of a formed diamond grinding wheel and are located entirely within the carbide second phase substrate 24.

With two cutting edges on opposite sides of the blade, the serrations 25 extend only between said opposite sides.

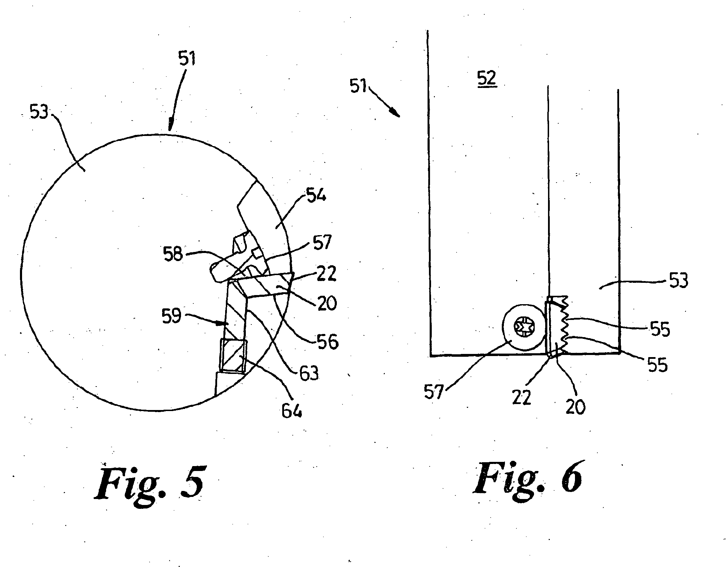

With reference to Figs. 5 and 6 of the drawings, there is shown a tool 51 having a shank 52 which in use is clamped into a machine tool for rotation of the tool about its longitudinal axis.

The tool 51, which is typically a reamer, has a cylindrical head 53 which carries at least one cutting insert 20. The head 53 is typically provided with a plurality of cutting inserts 20 at angularly spaced locations around the head 53, and only one of which is shown for the sake of simplicity and the invention will be described in detail with reference to said one blade only, any other blade being substantially identical.

Each insert 20 is arranged in a respective recess 54 located in the periphery of the head 53. The head 53 may also have a plurality of axially extending centering pads (not shown) spaced around the head. If two inserts 20 are utilised these may be arranged diametrically opposite each other.

The cutting insert 20 is oriented radially of the head 53. The recess 54 has a radial side face 56 against which a cutting insert is secured by a clamping screw 57.

The serrations 25 on the rear of the insert inter-engage with like radial serrations 55 on the radial side face 56 of the recess 54. In this example, the serrations 25 & 55 are in the form of flat sided straight ribs of triangular cross-section with the included angle at the apex being between 45-90° of arc, preferably about 60° of arc. The serrations have a pitch of between 1.00mm and 1.75mm, and the tops of the ribs are chamfered. An axially extending clearance hole 58 is provided at the intersection of the side face 56 of the recess 54, and the radially inner side of the recess.

The insert 20 is held in the recess by the screw 57 which presses the insert 20 so that the serrations 25 & 55 are hard in abutment with each other, so that any loads on the blade are transmitted to the tool head 53 through the interengaged serrations.

The inner facing side of the insert abuts against at least one adjuster 59. Each adjuster 59 comprises a tapered wedge which is moveable in a chordal bore 63, by means of an adjuster screw 64 for radial adjustment of the height of the cutting edge 22. The total adjustment range will be about 0.5mm.

When an insert is first fitted to a tool, the insert is set to the correct radial adjustment by the conventional trial and error technique,by adjustment of position of the insert. The blade is typically set to an accuracy of between 3-5 microns. Thereafter if it is desired to renew the cutting edge 22, the insert 20 is removed from the notch 22 by unscrewing of the clamping screw 57. The insert 20 is then re-positioned to provide a new edge, our replaced by a new identical blade. Since the serrations 25 on the back face of any blade are precision ground therein relative to the cutting edge(s) the new blade when fitted to the reamer will provide an accurately axially positioned cutting edge and therefore needs only to be radially adjusted.

The insert 20 may be mounted on a removable carrier (not shown) and the assembled insert 20 and carrier are secured in the respective recess 54.

Typical machine tools on which the inserts 20 may be used are borers, reamers, milling heads etc.

## Claims

1. A cutting blade insert (20) for a machine tool comprising a flat blade formed from a polycrystalline diamond material phase (23) which is a composite of individual diamond crystals sintered together in an inter-connected network and having a front face (21) formed from the PCD phase with at least one cutting edge (22) thereon, and a rear face formed from a second phase-substrate (24), **characterised in that** the rear face has at least one groove (25) therein formed within the second phase substrate and the front face is a continuous flat surface and wherein the insert is substantially square with four cutting edges and the rear of the blade is provided with two sets of intersecting serrations (25A, 25B).

2. An insert as claimed in Claim 1, wherein at least one groove is provided in the rear face substantially normal to a cutting edge.

3. An insert as claimed in Claim 1 or Claim 2 wherein, the or each groove is one of a plurality of serrations (35) formed in the substrate.

4. A cutting tool (51) comprising a body having a recess (54) therein with an insert (20) according to any one of Claims 1 to 3 mounted therein, and each groove on the rear of the insert mutually inter-engages with a co-operating ridge or ridges on the tool to secure the insert against machining loads.

5. A cutting tool as claimed in Claim 4 wherein the cutting blade is adjustably located along the ridge by means of a single screw threaded adjuster (64).

6. A cutting tool as claimed in Claim 4 or Claim 5 wherein the insert is mounted within a recess (54) on the circumferential surface of the tool, and any ridge or ridges are provided by serrations (55) on a side face of the recess.

7. A cutting tool as claimed in Claim 6, wherein the insert is secured to said face by the head of a clamping screw (57) or a clamp down plate.

8. A method of securing a PCD material cutting blade insert (20) according to any of claims 1 to 3 in a cutting tool (51), wherein the blade insert is clamped against a mutually inter-engagable ridge or ridges provided on the tool, so that the groove(s) and ridge(s) are mutually inter-engaged.

9. A method as claimed in Claim 8 wherein said at least one groove extends substantially normal with the cutting edge of the blade for the whole width of the blade, and the blade is adjustably mounted on the ridge or ridges by movement of the blade along the ridge(s) by adjuster means (59) provided on the tool.

10. A method as claimed in Claim 8 wherein the cutting blade insert has a plurality of cutting edges once of which presents on the cutting tool as the duty edge, the method further comprising changing the duty cutting edge by removing the blade insert from the tool and relocating said blade insert on the ridge(s), to provide a new cutting edge, with the mutually inter-engaging groove(s) and ridge(s) ensuring a realignment of the new duty cutting edge.

## Patentansprüche

1. Ein Schneidklingeneinsatz (20) für ein Maschinenerkzeug, aufweisend eine ebene Klinge, die aus einer polykristallinen Diamantenmaterialphase (23) ausgebildet ist, die ein Kompositmaterial aus einzelnen Diamantkristallen ist, die zu einem untereinander verbundenen Netzwerk versintert sind, und wobei die Klinge eine Vorderseite (21) aufweist, die mit mindestens einer Schneidkante (22) aus der PCD-Phase ausgebildet ist, und eine Rückseite, die aus einem Zweitphasensubstrat (24) ausgebildet ist, **dadurch gekennzeichnet, dass** auf der Rückseite im Zweitphasensubstrat mindestens eine Rille (25) ausgebildet ist und die Vorderseite eine kontinuierliche ebene Fläche ist, und wobei der Einsatz im Wesentlichen quadratisch mit vier Schneidkanten ist und die Rückseite der Klinge mit zwei Sätzen von sich kreuzenden Verzahnungen (25A, 25) versehen ist.

2. Ein Einsatz gemäß Anspruch 1, wobei mindestens eine Rille in der Rückseite im Wesentlichen senkrecht zu einer Schneidkante vorgesehen ist.

3. Ein Einsatz gemäß Anspruch 1 oder Anspruch 2, wobei die oder jede Rille eine von einer Mehrzahl von in dem Substrat ausgebildeten Verzahnungen (35) ist.

4. Ein Schneidwerkzeug (51), aufweisend einen Körper mit einer Aussparung (54) darin, wobei ein Einsatz (20) nach einem der Ansprüche 1 bis 3 in dieser montiert ist, und wobei jede Rille auf der Rückseite des Einsatzes in wechselseitigem Eingriff mit einer zusammenarbeitenden Rippe oder Rippen auf dem Werkzeug ist, um den Einsatz gegen Bearbeitungslasten zu sichern.

5. Ein Schneidwerkzeug gemäß Anspruch 4, wobei die Schneidklinge mittels einer einzelnen, ein Schraubgewinde aufweisenden Verstelleinrichtung (64) entlang der Rippe verstellbar ist.

6. Ein Schneidwerkzeug gemäß Anspruch 4 oder Anspruch 5, wobei der Einsatz in einer Aussparung (54) auf der Umfangsfläche des Werkzeugs montiert ist, und jegliche Rippe oder Rippen mittels Verzahnungen (55) auf einer Seitenfläche der Aussparung vorgesehen sind.

7. Ein Schneidwerkzeug gemäß Anspruch 6, wobei der Einsatz mittels des Kopfs einer Klemmschraube (57) oder einer Niederklemmplatte an der Fläche befestigt ist.

8. Ein Verfahren zum Sichern eines aus PCD-Material bestehenden Schneidklingeneinsatzes (20) gemäß einem der Ansprüche 1 bis 3 in einem Schneidwerkzeug (51), wobei der Schneideinsatz gegen eine wechselseitig miteinander in Eingriff stehende Rippe oder Rippen festgeklemmt wird, die auf dem Werkzeug vorgesehen ist/sind, so dass die Rille(n) und die Rippe(n) wechselseitig miteinander in Eingriff stehen.

9. Ein Verfahren gemäß Anspruch 8, wobei die mindestens eine Rille sich im Wesentlichen senkrecht zur Schneidkante der Klinge über die gesamte Breite der Klinge erstreckt, und die Klinge auf der Rippe oder den Rippen mittels Bewegung der Klinge entlang der/den Rippe(n) durch auf dem Werkzeug vorgesehene Verstelleinrichtungen (59) verstellbar montiert ist.

10. Ein Verfahren gemäß Anspruch 8, wobei der Schneidklingeneinsatz eine Mehrzahl von Schneidkanten aufweist, wobei eine von diesen sich auf dem Schneidwerkzeug als die Arbeitskante präsentiert, wobei das Verfahren weiter umfasst: Wechseln der Arbeitsschneidkante durch Entfernen des Schneideinsatzes aus dem Werkzeug und Neuanordnen des Schneideinsatzes auf der/den Rippe(n), um eine neue Schneidkante bereitzustellen, wobei die wechselseitig miteinander in Eingriff stehenden Rille(n) und Rippe(n) eine erneute Ausrichtung der neuen Arbeitsschneidkante gewährleisten.

## Revendications

1. Insert de lame de coupe (20) pour une machine outil comprenant une lame plate formée à partir d'une phase métallique de diamant polycristallin (23) qui est composée de cristaux de diamant individuels frittés ensemble dans un réseau interconnecté et ayant une face avant (21) formée à partir de la phase PCD avec au moins un bord de coupe (22) sur celle-ci, et une face arrière formée à partir d'un second substrat de phase (24), **caractérisé en ce que** la face arrière a au moins une rainure (25) dans celle-ci formée à l'intérieur du second substrat de phase et la face avant est une surface plate continue et dans lequel l'insert est sensiblement carré avec quatre bords de coupe et l'arrière de la lame est prévu avec deux ensembles de dentelures d'intersection (25A, 25B).

2. Insert selon la revendication 1, dans lequel au moins une rainure est prévue dans la face arrière sensiblement normale par rapport à un bord de coupe.

3. Insert selon la revendication 1 ou la revendication 2, dans lequel la ou chaque rainure est l'une d'une pluralité de dentelures (35) formées dans le substrat.

4. Outil de coupe (51) comprenant un corps ayant un évidement (54) à l'intérieur de celui-ci avec un insert (20) selon l'une quelconque des revendications 1 à 5 monté dans celui-ci, et chaque rainure sur l'arrière de l'insert se met en prise mutuellement avec une crête ou des crêtes coopérantes sur l'outil afin de fixer l'insert contre les charges d'usinage.

5. Outil de coupe selon la revendication 4, dans lequel la lame de coupe est positionnée de manière ajustable le long de la crête au moyen d'un seul dispositif d'ajustement fileté de vis (64).

6. Outil de coupe selon la revendication 4 ou la revendication 5, dans lequel l'insert est monté à l'intérieur d'un évidement (54) sur la surface circonférentielle de l'outil, et la crête ou les crêtes sont fournies par des dentelures (55) sur une face latérale de l'évidement.

7. Outil de coupe selon la revendication 6, dans lequel l'insert est fixé sur ladite face par la tête d'une vis de serrage (57) ou une plaque inférieure de serrage.

8. Procédé pour fixer un insert de lame de coupe en PCD (20) selon l'une quelconque des revendications 1 à 3, dans un outil de coupe (51), dans lequel l'insert de lame est bloqué contre une crête ou des crêtes pouvant se mettre mutuellement en prise prévues sur l'outil, de sorte que la (les) rainure(s) et la (les) crête(s) sont mutuellement mises en prise.

9. Procédé selon la revendication 8, dans lequel ladite au moins une rainure s'étend sensiblement normalement avec le bord de coupe de la lame sur toute la largeur de la lame, et la lame est montée de manière ajustable sur la crête ou les crêtes par le mouvement de la lame le long de la (des) crête (s) par des moyens formant ajusteur (59) prévus sur l'outil.

10. Procédé selon la revendication 8, dans lequel l'insert de lame de coupe a une pluralité de bords de coupe, dont l'un est présent sur l'outil de coupe en tant que bord de service, le procédé comprenant en outre l'étape consistant à changer le bord de coupe de service en retirant l'insert de lame de l'outil et en repositionnant ledit insert de lame sur la (les) crête(s), pour fournir un nouveau bord de coupe, avec la (les) rainures et la (les) crêtes qui se mettent mutuellement en prise, qui garantissent la réalignement du nouveau bord de coupe de service.
